(19) Europäisches Patentamt
European Patent Office
Office européen des brevets

(11) Publication number: 0 162 719
A2

# (12) EUROPEAN PATENT APPLICATION

(21) Application number: 85303654.9

(51) Int. Cl.[4]: C 01 B 33/28

(22) Date of filing: 23.05.85

(30) Priority: 24.05.84 GB 8413370

(43) Date of publication of application:
27.11.85 Bulletin 85/48

(84) Designated Contracting States:
BE DE FR GB IT NL

(71) Applicant: The British Petroleum Company p.l.c.
Britannic House Moor Lane
London EC2Y 9BU(GB)

(72) Inventor: Barlow, Michael Thomas
The British Petroleum Company p.l.c. Chertsey Road
Sunbury-on-Thames Middlesex, TW16 7LN(GB)

(74) Representative: Fawcett, Richard Fennelly et al,
BP INTERNATIONAL LIMITED Patents Division Chertsey Road
Sunbury-on-Thames Middlesex, TW16 7LN(GB)

## (54) Theta-3, a novel crystalline aluminosilicate and its preparation.

(57) A crystalline aluminosilicate of the ZSM-12 family, designated Theta-3, having the following composition in terms of the mole ratios of oxides:

$$0.9 \pm 0.2\ M_2/nO:Al_2O3:xSiO_2:yH_2O$$

wherein M is a cation of valance n, x is at least 20 and y/x is 0 to 30 and an XRD pattern (Cu K-alpha radiation) distinguished by a very strong line at 3.82 ± 0.08 Angstroms. Theta-3 is prepared by hydrothermal crystallisation from a gel containing a quaternary nitrogen compound of the formula $BzNR^+{}_3X^-$ wherein Bz is a benzyl radical, R is a hydrocarbyl group and $X^-$ is an anion.

EP 0 162 719 A2

# THETA-3, A NOVEL CRYSTALLINE ALUMINOSILICATE AND ITS PREPARATION

The present invention relates generally to crystalline aluminosilicates and in particular to a novel crystalline aluminosilicate of the ZSM-12 family, designated zeolite Theta-3, and a process for the production of the zeolite Theta-3.

Crystalline aluminosilicates exist in a range of structural forms. One family of such aluminosilicates contains the zeolites. Zeolites, both natural and synthetic, are ordered porous crystalline aluminosilicates having a definite crystalline structure within which there are a large number of small cavities which are interconnected by a number of small channels. These cavities and channels are uniform in size, and are capable of adsorbing molecules of certain dimensions while rejecting those of larger dimensions. These materials have therefore been used as molecular sieves and include a wide variety of positive ion-containing crystalline aluminosilicates, both natural and synthetic. Such aluminosilicates have been described as having a rigid three-dimensional network of $SiO_4$ and $AlO_4$ in which the tetrahedra are cross-linked by the sharing of oxygen atoms whereby the ratio of the total aluminium and silicon atoms to oxygen is 1:2. The electrovalence of the aluminium-containing tetrahedra is balanced by the inclusion in the crystal of a cation, for example, an alkali metal or an alkaline earth metal cation. This can be expressed by a formula in which the ratio of Al to the number of the various cations, such as Ca/2, Sr/2, Na, K or Li, is equal to unity. One type of cation can be

exchanged in entirety or partially by another type of cation utilizing ion exchange techniques in a conventional manner. By means of such cation exchange, it is possible to vary the size of the pores in the given aluminosilicate. The spaces between the tetrahedra may be occupied by molecules of water in the uncalcined form of the zeolite. More recently, the structure of these zeolites has been characterised by their X-ray diffraction patterns. A list of the various types of zeolites as characterised by their X-ray diffraction pattern can be found in the book by Meier, W.M. and Olson, D.H. entitled, "Atlas of Zeolite Structure Types", published by the Structure Commission of the International Zeolite Association (1978) and distributed by Polycrystal Book Service, Pittsburgh, Pa, USA.

In recent years attention and interest has centred around high silica zeolites, that is zeolites in which the atomic ratio of silicon atoms to aluminium atoms is greater than 10:1. A typical member of this class of zeolites, ZSM-5, has been shown to be an active and selective catalyst for a number of hydrocarbon reactions.

Another potentially important high silica zeolite is that designated as ZSM-12 in US Patent No. 3,832,449. According to the aforesaid US Patent, ZSM-12 compositions are identified in terms of mole ratios of oxides as follows:

$$1.0\pm 0.4\ M_{2/n}O.\ W_2O_3.20\text{-}100YO_2.zH_2O$$

wherein M is a cation, n is the valence of said cation, W is selected from the group consisting of aluminium and gallium, Y is selected from the group consisting of silicon and germanium and z is from 0 to 60. ZSM-12 zeolites are also said to possess a definite distinguishing crystalline structure whose XRD pattern shows the distinctive lines as shown in the following Table 1.

0162719

TABLE 1

| Interplanar Spacing D (Angstroms) | Relative Intensity* |
|---|---|
| 11.9 ± 0.2 | M |
| 10.1 ± 0.2 | M |
| 4.76 ± 0.1 | W |
| 4.29 ± 0.08 | VS |
| 3.98 ± 0.08 | M |
| 3.87 ± 0.07 | VS |
| 3.49 ± 0.07 | W |
| 3.38 ± 0.07 | M |
| 3.20 ± 0.06 | W |
| 3.05 ± 0.05 | W |
| 2.54 ± 0.03 | W |

S = strong, M = medium, W = Weak and VS = very strong.

The method for preparing the zeolite ZSM-12 described in USP-A-3,832,449 comprises preparing a solution containing tetraethylammonium cations, sodium oxide, an oxide of aluminium or gallium, an oxide of silicon or germanium, and water and having a composition in terms of mole ratios of oxides, falling within the ranges as shown in the following Table 2:-

TABLE 2

| | Broad | Preferred | Particularly preferred |
|---|---|---|---|
| $OH^-/YO_2$ | 0.10 - 0.40 | 0.15 - 0.25 | 0.17 - 0.20 |
| $R_4N^+/(R_4N^++Na^+)$ | 0.2 - 0.95 | 0.28 - 0.90 | 0.3 - 0.5 |
| $H_2O/OH^-$ | 20 - 300 | 5.0 - 100 | 80 - 100 |
| $YO_2/W_2O_3$ | 40 - 200 | 85 - 125 | 90 - 100 |

wherein R is ethyl, W is aluminium or gallium and Y is silicon or germanium and maintaining the mixture until crystals of the zeolite are formed.

In US Patent No. 4,452,769 (published after the priority date claimed for the subject application, but before its filing date) there is described a method for preparing a zeolite ZSM-12 type crystalline material which comprises preparing a reaction mixture containing a source of an alkali metal oxide, an oxide of silicon, an oxide of aluminium, methyltriethylammonium ion, and water and having a composition, in terms of mole ratios of oxides falling within the following ranges:

$$SiO_2/Al_2O_3 = 40 \text{ or higher to infinite}$$

$$M_2O/(MTEA)_2O = 0.2 \text{ to } 2.0$$

$$H_2O/OH^- = 50 \text{ to } 400$$

and maintaining said mixture under crystallisation conditions until crystals of said zeolite are formed. The XRD pattern of pure ZSM-12 as prepared by the process of US-A-4,452,769 is said to show a number of differences when compared with that of ZSM-12 prepared according to US-A-3,832,449, notably:

(i) the somewhat broad line at 26.55° (2 theta), a poorly resolved doublet, is split into two well-resolved peaks at 26.2 and 26.75° (2 theta),

(ii) the line at 23.2° (2 theta) is split into a doublet at 23.0 and 23.3° (2 theta),

(iii) the line at 29.25° (2 theta) has narrowed, and

(iv) the intensity of the line at about 31° (2 theta) has increased accordingly.

The present invention provides a novel crystalline aluminosilicate of the ZSM-12 family, designated Theta-3, having the following composition in terms of the mole ratios of the oxides:

$$0.9 \pm 0.2\ M_2/nO:Al_2O_3:xSiO_2:yH_2O \qquad (I)$$

wherein M is at least one cation of valence n,

x is at least 20, and

y/x is between 0 and 30,

and wherein the aluminosilicate in the dry as prepared form has an X-ray diffraction pattern substantially as set forth in Table 3.

In another aspect the present invention provides a process for the production of zeolite Theta-3 which comprises heating together

in aqueous solution at elevated temperature a source of silica, a source of alumina and a mineralising agent in the presence of a quaternary nitrogen compound of formula $BzNR_3^+X^-$ (I) wherein Bz is a benzyl radical, R is a hydrocarbyl group and $X^-$ is an anion.

The X-ray powder diffraction of zeolite Theta-3 as obtained by the process of the present invention is shown in Table 3, where it is compared with that of zeolite ZSM-12 as obtained by the process of US-A-3,832,449. Although the X-ray powder diffraction patterns generally similar, that of zeolite Theta-3 obtained by the process of the present invention shows an extra strong line at d(A) = 3.82 which is not found in the X-ray pattern of ZSM-12 as obtained by the process of US-A-3,832,449. The extra line is present in all samples of zeolite Theta-3 when compared under identical conditions and has the same intensity relative to the other features in the powder X-ray diffraction pattern, indicating that it is a characteristic of the zeolite and is not ascribable to impurities. It is present in both the uncalcined and calcined forms of the zeolite.

The specific values in the Table were determined using copper K-alpha radiation and computer step scan on a conventional X-ray powder diffraction machine.

It will be understood by those skilled in the art that the X-ray diffraction pattern of aluminosilicates may vary in relative intensity and d-spacing depending for example upon whether the sample being examined is calcined or uncalcined, upon the temperature of calcination, upon the nature of the cation present in the aluminosilicate, the mole ratio of silica to alumina, and the particle size of the aluminosilicate. It is therefore important to compare zeolite samples under as close to identical conditions as possible.

The cation M present in the novel zeolite of formula (I) may be one or more cations selected from organic nitrogen cations, hydrogen cations, ammonium cations, alkali or alkaline earth metal cations, aluminium cations, gallium cations or transition metal cations. In the as synthesised form, the zeolite Theta-3 may contain a number of $BzNR_3^+$ cations which have been occluded in the cavities or pores of

the structure during synthesis. Since it is difficult and in some cases impossible to remove these cations by ion-exchange techniques, it is convenient to use a calcination method for their removal. Calcination techniques which involve heating the zeolite in flowing oxygen or air will be familiar to the skilled man.

The other cations present in the solid, or those which remain after the zeolite has been calcined, can be replaced using conventional ion exchange techniques. In this way many ion-exchanged or partially ion-exchanged forms can be made, for example the ammonium form, hydrogen form, lanthanide form or transition metal form.

Zeolite ZSM-12 is prepared by crystallising a mixture of a source of silica, a source of alumina and a mineralising agent in aqueous solution at elevated temperature in the presence of a quaternary nitrogen compound of formula:

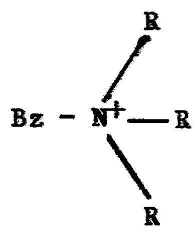

$X^-$ (I)

wherein Bz is an unsubstituted or substituted benzyl radical and is preferably

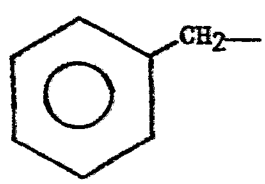

or

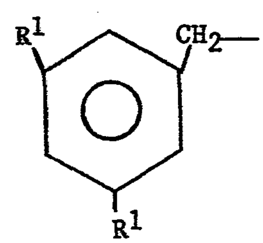

(II)

and where the $R^1$ groups are independently alkyl, aryl or cycloalkyl monovalent hydrocarbyl radicals. The anion $X^-$ may be any anion such as halide, sulphate, hydroxide, carboxylate and the like. The anion is preferably either the hydroxide ion or a halide ion. The hydrocarbyl radicals R in the compound of formula (I) may suitably

be alkyl radicals, for example methyl, ethyl or propyl radicals.

The types and ranges of starting materials which can be used will likewise be familiar to the skilled man. Thus silica sources which can be used to advantage are colloidal silicas, e.g. Ludox AS40 and HS40 silica sols, water glass, sodium silicate, amorphous and fumed silicas, dealuminated clays and the like. Likewise the alumina source may be an alumina polymorph or an inorganic or organic salt such as aluminium nitrate, sodium aluminate, aluminium alkoxides and the like.

As regards mineralising agents, those preferred are the oxides or hydroxides of the Group IA or IIA metals such as sodium or potassium hydroxide.

Zeolite Theta-3 may thus be crystallised from a five component mixture containing

(a) $SiO_2$

(b) $Al_2O_3$

(c) a mineralising agent containing cations (M) and hydroxide ions

(d) $H_2O$, and

(e) an organic cation salt as described herein.

The following Table (Table 4) provides the compositional ranges within which Theta-3 can be prepared. It will be appreciated that within the ranges quoted in the Table it may be possible to generate an extreme composition under which zeolite Theta-3 may not crystallise, however, the skilled man will be able to recognise these and interpret the quoted ranges correctly.

TABLE-4

COMPOSITION RANGES FOR ZEOLITE THETA-3

| COMPONENTS | RATIOS OF COMPONENTS (MOLAR) | |
|---|---|---|
| | BROAD | PREFERRED |
| $SiO_2 : Al_2O_3$ | greater than 20:1 | 40:1 - 150:1 |
| $M^{n+} : SiO_2$ | 1:30 - 1:1 | 1:5 - 1:2 |
| $OH^- : SiO_2$ | 1:100 - 1:2 | 1:50 - 1:5 |
| $H_2O : SiO_2$ | greater than 10:1 | 20:1 - 150:1 |
| Organic Cation : $SiO_2$ | 1:250 - 1:1 | 1:250 - 1.2 |

Zeolite Theta-3 is conveniently crystallised at elevated temperature, preferably in excess of 100°C, even more preferably in the range 120 to 190°C. Under these conditions it is generally necessary to carry out the crystallisation in a closed vessel, equipped with agitation means, under autogenous water vapour pressure. Crystallisation times will depend to some extent on the chemical nature of the reactants and the temperature at which the crystallisation is carried out, but is conveniently in the range 0.5 to 100 hours, preferably 24 to 80 hours.

Zeolite Theta-3, after crystallisation is conveniently converted into the hydrogen-form for use as a catalyst in hydrocarbon conversion reactions. The hydrogen form may also be subjected to exchange or impregnation with a metal suitable for imparting other specific types of catalytic activity. The metal compounds which may be used for ion-exchange and/or impregnation may be compounds of any one of the following metals or groups of metals, namely those belonging to Groups IB, IIB, IIIA, IVA, VA, VIB, VIIB and VIII according to the Periodic Table due to Mendeleef. Specifically, compounds of copper,silver, zinc, aluminium, gallium, indium, thallium, lead, antimony, bismuth, chromium, molybdenum, tungsten, manganese, iron, cobalt, nickel, ruthenium, rhodium, palladium, iridium, platinum and rhenium are preferred.

The aluminosilicate products of the present invention may be bound in a suitable binding material before or after impregnation or after exchange with one of the aforementioned metal compounds to produce an attrition resistant catalyst. The binder for this purpose may be any one of the conventional alumina or silica binders.

The aluminosilicates of the present invention may be used, whether or not impregnated and/or ion-exchanged, as catalysts or as catalyst supports for any of a variety of conversion reactions. The aluminosilicate Theta-3 may be used as such or as a component of a catalyst mixture containing other active or inactive components. The Theta-3 may be used in admixture with other zeolites. The catalysts may be used in the form of fixed, fluidised or moving beds.

The present invention is further illustrated with reference to the following Examples.

Example 1

18.77g of Ludox AS40 colloidal silica was dispersed in 70g of distilled water at room temperature. To this mixture was added in sequence 0.16g of sodium aluminate (40% by weight $Al_2O_3$), 0.27g of sodium hydroxide and 17.3g of a 40% by weight solution of benzyltrimethylammonium hydroxide in water. The mixture was stirred vigorously for 30 minutes.

At the end of this time, the mixture was transferred to a stainless steel pressure vessel and rapidly heated to 170°C. The mixture was maintained at this temperature for 72 hours with continuous agitation of the vessel to ensure that the contents were mixed. After 72 hours the mixture was cooled and the solid contents of the vessel isolated by filtration and dried. X-ray powder diffraction measurements of the solid produced a pattern as shown in Table 3.

Examples 2-10

The method of Example 1 was followed with the adjustments to the composition shown in Table 2. The product isolated was as shown in the Table.

0162719

TABLE 2

T = 170°C

reaction time = 72 hours

| WEIGHT OF COMPONENTS IN GRAMS | | | | | | |
|---|---|---|---|---|---|---|
| Ex | Ludox AS40 (40%) | Distilled $H_2O$ | Sodium Aluminate (40% $Al_2O_3$) | Sodium Hydroxide | Benzyl-trimethyl ammonium hydroxide (40% w/w aqueous solution) | Product (% Theta -3 by X-ray) |
| 1 | 18.77 | 70 | 0.16 | 0.27 | 17.3 | 100% |
| 2 | 18.77 | 72 | 0.10 | 0.31 | 17.3 | 100% |
| 3 | 18.77 | 72 | 0.13 | 0.3 | 17.3 | 100% |
| 4 | 18.77 | 72 | 0.16 | 0.3 | 17.3 | 100% |
| 5 | 18.77 | 72 | 0.21 | 0.27 | 17.3 | 100% |
| 6 | 18.77 | 72 | 0.32 | 0.27 | 17.3 | 30% |
| 7 | 18.77 | 72 | 0.43 | 0.19 | 17.3 | 10% |
| 8 | 18.77 | 72 | 0.1 | 1.88 | 7.5 | 100% |
| 9 | 18.77 | 72 | 0.1 | 0.59 | 6.1 | 100% |
| 10 | 18.77 | 72 | 0.1 | 0.7 | 13.8 | 100% |

TABLE 3

X-RAY POWDER DIFFRACTION PATTERNS

| ZSM-12* d(Å) | Theta-3** d(Å) |
|---|---|
| 11.9 ± 0.2 (M) | 11.9 ± 0.2 (VS) |
| 11.6 ± 0.2 (M) | 11.7 ± 0.2 (VS) |
| 10.1 ± 0.2 (M) | 10.1 ± 0.2 (M) |
| 4.76 ± 0.1 (W) | 4.76 ± 0.1 (M) |
| 4.7 ± 0.1 (W) | 4.69 ± 0.1 (M) |
| 4.29 ± 0.08 (VS) | 4.24 ± 0.08 (VS) |
| 3.98 ± 0.08 (VS) | 3.98 ± 0.08 (VS) |
| 3.87 ± 0.07 (VS) | 3.88 ± 0.08 (VS) |
| | 3.82 ± 0.08 (VS) |
| 3.49 ± 0.07 (W) | 3.45 ± 0.07 (W) |
| 3.38 ± 0.07 (M) | 3.39 ± 0.07 (M) |
| 3.2 ± 0.06 (W) | 3.32 ± 0.06 (W) |
| 3.05 ± 0.05 (W) | 3.04 ± 0.05 (W) |
| | 2.89 ± 0.05 (W) |
| 2.54 ± 0.03 (W) | 2.51 ± 0.05 (W) |

* ZSM-12 sample prepared using method of Example 1, USP 3,832,449

** Theta-3 sample prepared using method of Example 1.

In the above Table

VS = very strong

S = strong

M = medium

W = weak

Claims:

1. A novel crystalline aluminosilicate of the ZSM-12 family, designated Theta-3, having the following composition in terms of the mole ratios of the oxides:

$$0.9 \pm 0.2\ M_{2/n}O:Al_2O_3:xSiO_2:yH_2O \qquad (I)$$

wherein M is at least one cation of valence n,

x is at least 20, and

y/x is between 0 and 30,

and wherein the aluminosilicate in the dry as prepared form has an X-ray diffraction pattern substantially as set forth in Table 3.

2. A process according to claim 1 wherein the XRD pattern (using copper K-alpha radiation) of the zeolite Theta-3 prior to calcination contains a very strong line at 3.82 ± 0.08 Angstroms.

3. A process for the production of zeolite Theta-3 which comprises heating together in aqueous solution at elevated temperature a source of silica, a source of alumina and a mineralising agent in the presence of a quaternary nitrogen compound of formula $BzNR_3^+X^-$ (I) wherein Bz is a benzyl radical, R is a hydrocarbyl group and $X^-$ is an anion.

4. A process according to claim 3 wherein Bz in the formula (I) is an unsubstituted benzyl radical.

5. A process according to claim 3 wherein Bz in the formula (I) is a substituted benzyl radical of the formula:

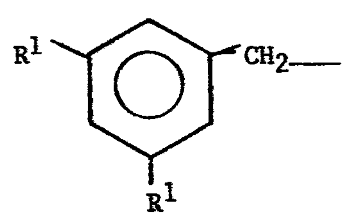

(II)

wherein $R^1$ is independently either an alkyl, aryl or cycloalkyl monovalent hydrocarbyl radical.

**6.** A process according to claim 3 wherein $X^-$ in the formula (I) is either a hydroxide or a halide ion.

**7.** A process according to claim 3 wherein R in the formula (I) is an alkyl radical.

**8.** A process according to any one of claims 3 to 7 wherein the mineralising agent is either an oxide or a hydroxide of a Group IA or IIA metal.

**9.** A process according to any one of claims 3 to 8 wherein zeolite Theta-3 is crystallised from a five component mixture containing (a) $SiO_2$, (b) $Al_2O_3$, (c) a mineralising agent containing cations (M) and hydroxide ions, (d) $H_2O$, and (e) an organic cation salt of formula (I) in the following compositional range:

$SiO_2:Al_2O_3$ greater than 20:1,
$M^{n+}:SiO_2$ in the range 1:30 to 1:1,
$OH^-:SiO_2$ in the range 1:100 to 1:2,
$H_2O:SiO_2$ greater than 10:1, and
Organic cation : $SiO_2$ in the range 1:250 to 1:1.

**10.** A process according to claim 9 wherein the components (a) to (e) are mixed in the following compositional range:

$SiO_2:Al_2O_3$ in the range 40:1 to 150:1,
$M^{n+}:SiO_2$ in the range 1:5 to 1:2,
$OH^-:SiO_2$ in the range 1:50 to 1:5,
$H_2O:SiO_2$ in the range 20:1 to 150:1, and
Organic cation:$SiO_2$ in the range 1:250 to 1:2